(19) Europäisches Patentamt

European Patent Office

Office européen des brevets

(11) **EP 4 752 110 A1**

(12) **EUROPEAN PATENT APPLICATION**

(43) Date of publication:
03.06.2026 Bulletin 2026/23

(21) Application number: 25214277.3

(22) Date of filing: 07.11.2025

(51) International Patent Classification (IPC):
**C01G 53/51** (2025.01)      **C01G 53/84** (2025.01)
**H01M 4/525** (2010.01)

(52) Cooperative Patent Classification (CPC):
**C01G 53/51; C01G 53/84; H01M 4/505;**
**H01M 4/525; H01M 10/054;** C01P 2002/72;
C01P 2002/74; C01P 2006/40; H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 26.11.2024 JP 2024205551

(71) Applicant: **TOYOTA JIDOSHA KABUSHIKI**
**KAISHA**
**Toyota-shi, Aichi-ken 471-8571 (JP)**

(72) Inventors:
• **KUWATA, Hiroko**
  **Toyota-shi, 471-8571 (JP)**
• **SHIBATA, Ryosuke**
  **Toyota-shi, 471-8571 (JP)**

(74) Representative: **Kuhnen & Wacker**
**Patent- und Rechtsanwaltsbüro PartG mbB**
**Prinz-Ludwig-Straße 40 A**
**85354 Freising (DE)**

(54) **ELECTRODE ACTIVE MATERIAL AND BATTERY**

(57)   Disclosed is an electrode active material having an O3-type structure, wherein the electrode active material has high capacity and high coulombic efficiency. The electrode active material of the present disclosure comprises a Na-containing transition metal oxide. The Na-containing transition metal oxide has an O3-type structure. The Na-containing transition metal oxide comprises, as constituent elements, Na, Ni, Mn, and O. An X-ray diffraction pattern of the Na-containing transition metal oxide satisfies $0.476 < I_{003}/I_{104} < 0.554$ (where $I_{003}$ is the diffraction peak intensity of the (003) plane in the X-ray diffraction pattern, and $I_{104}$ is the diffraction peak intensity of the (104) plane in the X-ray diffraction pattern).

FIG. 1B

Layer of transition metal element

Sodium ion

Transition metal ion

EP 4 752 110 A1

**Description**

TECHNICAL FIELD

The present application discloses an electrode active material and a battery.

BACKGROUND ART

PTL 1 and NPL 1 and 2 each disclose a Na-containing transition metal oxide having an O3-type structure and comprising Na, Ni, Mn, and O as constituent elements. The Na-containing transition metal oxide, for example, is useful as an electrode active material for sodium-ion batteries.

CITATION LIST

PATENT LITERATURE

PTL 1 Japanese Unexamined Patent Publication (Kokai) No. 2023-166332

NON PATENT LITERATURE

NPL 1 J. Electrochem. Soc., 159(7) A1048-A1051(2012)
NPL 2 Inorg. Chem., 2012, 51, 6211-6220

SUMMARY

TECHNICAL PROBLEM

Electrode active materials comprising a Na-containing transition metal oxide having an O3-type structure have room for improvement in terms of capacity and coulombic efficiency.

SOLUTION TO PROBLEM

The present application, as a means for achieving the object above, discloses the following plurality of aspects.

<Aspect 1>

An electrode active material, comprising a Na-containing transition metal oxide, wherein

the Na-containing transition metal oxide has an O3-type structure,
the Na-containing transition metal oxide comprises, as constituent elements, Na, Ni, Mn, and O, and
an X-ray diffraction pattern of the Na-containing transition satisfies relationship (1) below:

$$0.476 < I_{003}/I_{104} < 0.554 \ (1)$$

$I_{003}$: diffraction peak intensity of (003) plane in the X-ray diffraction pattern
$I_{104}$: diffraction peak intensity of (104) plane in the X-ray diffraction pattern.

<Aspect 2>

The electrode active material according to Aspect 1, wherein
the X-ray diffraction pattern of the Na-containing transition metal oxide satisfies relationship (2) below:

$$0.492 \leq I_{003}/I_{104} \leq 0.513 \ (2).$$

<Aspect 3>

The electrode active material according to Aspect 1 or 2, wherein
the Na-containing transition metal oxide comprises, as a constituent element, Fe.

<Aspect 4>

A battery, comprising a positive electrode active material layer, an electrolyte layer, and a negative electrode active material layer, wherein
the positive electrode active material layer comprises the electrode active material according to any of Aspects 1 to 3.

ADVANTAGEOUS EFFECTS OF INVENTION

The electrode active material of the present disclosure has high capacity and high coulombic efficiency.

BRIEF DESCRIPTION OF DRAWINGS

FIG. 1A is a schematic view for describing ion conductivity of an electrode active material.
FIG. 1B is a schematic view for describing ion conductivity of an electrode active material.
FIG. 2 shows one example of a manufacturing method of the electrode active material.
FIG. 3 schematically shows one example of a configuration of the battery.
FIG. 4 shows the X-ray diffraction pattern of the Na-containing transition metal oxide having an O3-type structure.

DESCRIPTION OF EMBODIMENTS

Hereinafter, one embodiment of each of the electrode active material and the battery of the present disclosure will be described. However, the electrode active material and the battery of the present disclosure are not limited to the embodiments described below.

1. Electrode active material

The electrode active material according to one embodiment comprises a Na-containing transition metal oxide. The Na-containing transition metal oxide has an O3-type structure. The Na-containing transition metal oxide comprises, as constituent elements, Na, Ni, Mn, and O. An X-ray diffraction pattern of the Na-containing transition metal oxide satisfies relationship (1) below:

$$0.476 < I_{003}/I_{104} < 0.554 \ldots (1)$$

$I_{003}$: diffraction peak intensity of (003) plane in the X-ray diffraction pattern
$I_{104}$: diffraction peak intensity of (104) plane in the X-ray diffraction pattern.

1.1 Crystal structure

The Na-containing transition metal oxide contained in the electrode active material has at least an O3-type structure as a crystal structure. The Na-containing transition metal oxide may have a crystal structure other than an O3-type structure in addition to having the O3-type structure. The Na-containing transition metal oxide may have an O3-type structure as the main phase. The Na-containing transition metal oxide may be one in which no crystal structure other than an O3-type structure is confirmed in the X-ray diffraction pattern.

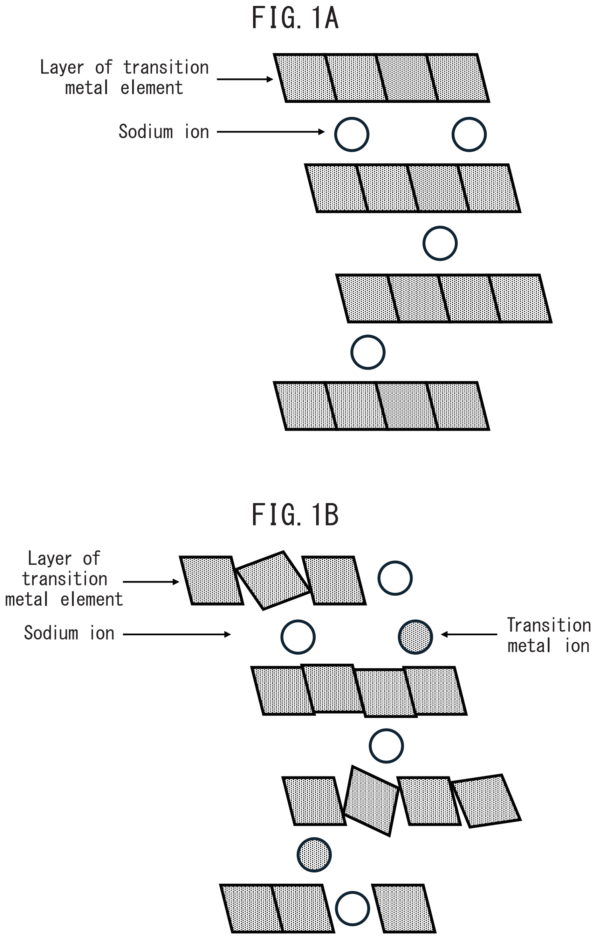

The Na-containing transition metal oxide having an O3-type structure has a layered structure in which Na ions are present between layers of transition metal elements. In order to increase conductivity of Na ions in the Na-containing transition metal oxide, it is considered effective to align the layers of transition metal elements, as shown in FIG. 1A, and to decrease the amount of transition metal elements in the Na-ion conduction paths and decrease the amount of Na in the layers of transition metal elements (decreasing so-called cation mixing). As shown in FIG. 1B, when the collapse or distortion of the layers of transition metal elements is significant, or when there is significant cation mixing, Na-ion conduction paths narrow, and capacity and coulombic efficiency for the electrode active material are reduced.

In the Na-containing transition metal oxide contained in the electrode active material according to one embodiment, the X-ray diffraction pattern of the Na-containing transition metal oxide satisfies the relationship (1) above. In the relationship (1) above, the (003) plane and (104) plane of the X-ray diffraction pattern both correspond to crystal planes of the layers of transition metal elements in the O3-type structure. By having the peak intensity ratio $I_{003}/I_{104}$ of these crystal planes at greater than 0.476 and less than 0.554, the extent of the octahedral structure constituting the layers of transition metal elements is considered appropriate, resulting in the layers of transition metal elements being aligned. Specifically, as shown in FIG. 1A, it can be said that the Na-containing transition metal oxide that satisfies the relationship (1) above has minimal collapse or distortion in the layers of transition metal elements and also minimal cation mixing. As a result, Na-ion conduction paths are sufficiently ensured, and capacity and coulombic efficiency for the electrode active material are increased.

The X-ray diffraction pattern of the Na-containing transition metal oxide may satisfy any of the relationships (1-1) to (1-20) below:

$$0.480 \leq I_{003}/I_{104} \leq 0.550 \ldots (1\text{-}1)$$

$$0.480 \leq I_{003}/I_{104} \leq 0.545 \ldots (1\text{-}2)$$

$$0.480 \leq I_{003}/I_{104} \leq 0.540 \ldots (1\text{-}3)$$

$$0.480 \leq I_{003}/I_{104} \leq 0.535 \ldots (1\text{-}4)$$

$$0.480 \leq I_{003}/I_{104} \leq 0.530 \ldots (1\text{-}5)$$

$$0.480 \leq I_{003}/I_{104} \leq 0.525 \ldots (1\text{-}6)$$

$$0.480 \leq I_{003}/I_{104} \leq 0.520 \ldots (1\text{-}7)$$

$$0.480 \leq I_{003}/I_{104} \leq 0.515 \ldots (1\text{-}8)$$

$$0.482 \leq I_{003}/I_{104} \leq 0.550 \ldots (1\text{-}9)$$

$$0.484 \leq I_{003}/I_{104} \leq 0.550 \ldots (1\text{-}10)$$

$$0.486 \leq I_{003}/I_{104} \leq 0.550 \ldots (1\text{-}11)$$

$$0.488 \leq I_{003}/I_{104} \leq 0.550 \ldots (1\text{-}12)$$

$$0.490 \leq I_{003}/I_{104} \leq 0.550 \ldots (1\text{-}13)$$

$$0.482 \leq I_{003}/I_{104} \leq 0.545 \ldots (1\text{-}14)$$

$$0.484 \leq I_{003}/I_{104} \leq 0.540 \ldots (1\text{-}15)$$

$$0.486 \leq I_{003}/I_{104} \leq 0.535 \ldots (1\text{-}16)$$

$$0.488 \leq I_{003}/I_{104} \leq 0.530 \ldots (1\text{-}17)$$

$$0.490 \leq I_{003}/I_{104} \leq 0.525 \ldots (1\text{-}18)$$

$$0.490 \leq I_{003}/I_{104} \leq 0.520 \ldots (1\text{-}19)$$

$$0.490 \leq I_{003}/I_{104} \leq 0.515 \ldots (1\text{-}20).$$

Particularly, as far as the present inventors have confirmed, when the X-ray diffraction pattern of the Na-containing transition metal oxide satisfies the relationship (2) below:

$$0.492 \leq I_{003}/I_{104} \leq 0.513 \ldots (2),$$

capacity and coulombic efficiency are likely to be further increased.

When the Na-containing transition metal oxide does not comprise Fe, the X-ray diffraction pattern of the Na-containing transition metal oxide may satisfy relationship (3-1) or (3-2) below:

$$0.490 \leq I_{003}/I_{104} < 0.510 \ldots (3\text{-}1)$$

$$0.492 \leq I_{003}/I_{104} \leq 0.503 \ldots (3\text{-}2).$$

When the Na-containing transition metal oxide comprises Fe, the X-ray diffraction pattern of the Na-containing transition metal oxide may satisfy relationship (4-1) or (4-2) below:

$$0.510 \leq I_{003}/I_{104} < 0.520 \ldots (4\text{-}1)$$

$$0.510 \leq I_{003}/I_{104} \leq 0.513 \ldots (4\text{-}2).$$

The "X-ray diffraction pattern of the Na-containing transition metal oxide" and "diffraction peak intensity" in the present application refer to those acquired under the following conditions. Specifically, an X-ray diffraction pattern is acquired by subjecting the Na-containing transition metal oxide to a $2\theta/\theta$ scan using an X-ray diffractometer (Rigaku, Automated Multipurpose X-ray Diffractometer SmartLab), $CuK\alpha$ as the radiation source, and tube voltage of 40 kV, tube current of 40 mA, step size of 0.02°, and scanning speed of 4°/min. In the X-ray diffraction pattern, the X-ray diffraction peak originating from the (003) plane of the O3-type structure typically appears at $16.6°\pm0.5°$ (but can vary depending on the transition metal composition and Na amount). The X-ray diffraction peak originating from the (104) plane of the O3-type structure typically appears at $41.8°\pm0.5°$ (but can vary depending on the transition metal composition and Na amount). After subtracting the background value near the peaks from the X-ray diffraction pattern using the PDXL analysis software, the $I_{003}/I_{104}$ above is determined from the intensity of each of the X-ray diffraction peaks.

1.2 Chemical composition

The above Na-containing transition metal oxide having an O3-type structure comprises, as constituent elements, Na, Ni, Mn, and O. As one example, the Na-containing transition metal oxide may comprise, as constituent elements, Na, Ni, Mn, and O only. The molar ratio of Na, Ni, and Mn in the Na-containing transition metal oxide is not particularly limited as long as the O3-type structure can be maintained. For example, with the molar quantity of Na contained in the Na-containing transition metal oxide contained in the electrode active material as $M_1$, the molar quantity of Ni contained in the Na-containing transition metal oxide as $M_2$, and the molar quantity of Mn contained in the Na-containing transition metal oxide as $M_3$, $M_1/(M_2 + M_3)$ may be 0.97 or greater and 1.09 or less. When $M_1/(M_2 + M_3)$ is 0.97 or greater and 1.09 or less, an O3-type structure is likely to be maintained, and formation of a crystal phase other than an O3 phase is likely to be inhibited.

The above Na-containing transition metal oxide having an O3-type structure may comprise, as constituent elements, other elements in addition to Na, Ni, Mn, and O. For example, the Na-containing transition metal oxide may comprise, as constituent elements, Na, Ni, Mn, an element M, and O. The element M may be at least one selected from Fe, Ti, Zn, Co, Al, Zr, Y, Ca, Li, Rb, Cs, W, Ce, Mo, Ba, Mg, Ta, Nb, V, Sc, Sr, B, and Cu. As one example, the Na-containing transition metal oxide may comprise, as a constituent element, Fe, as well as Na, Ni, Mn, and O.

The above Na-containing transition metal oxide having an O3-type structure may have a chemical composition represented by $Na_aNi_xMn_yM_zO_2$ (where $0.97 \leq a \leq 1.09$; $0 < x < 1.00$; $0 < y < 1.00$; and $0 \leq z < 1.00$, and the element M is at least one selected from Fe, Ti, Zn, Co, Al, Zr, Y, Ca, Li, Rb, Cs, W, Ce, Mo, Ba, Mg, Ta, Nb, V, Sc, Sr, B, and Cu). a is 0.97 or greater and may be 0.99 or greater or 1.00 or greater, and is 1.09 or less and may be 1.07 or less, 1.05 or less, or 1.03 or less. x is greater than 0 and may be 0.10 or greater, 0.20 or greater, 0.30 or greater, 0.40 or greater, or 0.50 or greater, and is less than 1.00 and may be 0.90 or less, 0.80 or less, 0.70 or less, 0.60 or less, 0.50 or less, 0.40 or less, or 0.34 or less. y is

greater than 0 and may be 0.10 or greater, 0.20 or greater, 0.30 or greater, 0.40 or greater, or 0.50 or greater, and is less than 1.00 and may be 0.90 or less, 0.80 or less, 0.70 or less, 0.60 or less, 0.50 or less, 0.40 or less, or 0.34 or less. $z$ is 0 or greater and may be 0.10 or greater, 0.20 or greater, or 0.30 or greater, and is less than 1.00 and may be 0.90 or less, 0.80 or less, 0.70 or less, 0.60 or less, 0.50 or less, 0.40 or less, 0.35 or less, or 0.33 or less. $x + y + z$ is not particularly limited as long as an O3-type structure is maintained. $x + y + z$, for example, may be 0.99 or greater, and may be 1.01 or less. The composition of O is approximately 2, but may be variable without being limited to exactly 2.0.

1.3 Others

As described above, the electrode active material according to one embodiment has high capacity and high coulombic efficiency by comprising the above specific Na-containing transition metal oxide. As described above, in the Na-containing transition metal oxide, layers of transition metal elements are aligned, and Na-ion conduction paths are sufficiently ensured, possibly leading to improvement in capacity and coulombic efficiency as a result. The electrode active material according to one embodiment may consist only of the above Na-containing transition metal oxide, or may comprise the above Na-containing transition metal oxide and another component (additional component). From the viewpoint of further increasing the above effect, the proportion of the additional component to the entire electrode active material may be a small amount. For example, when the entirety of the electrode active material is 100% by mass, the content of the above Na-containing transition metal oxide may be 50% by mass or more and 100% by mass or less, 60% by mass or more and 100% by mass or less, 70% by mass or more and 100% by mass or less, 80% by mass or more and 100% by mass or less, 90% by mass or more and 100% by mass or less, 95% by mass or more and 100% by mass or less, or 99% by mass or more and 100% by mass or less. The electrode active material according to one embodiment, for example, may be a positive electrode active material, and more specifically, may be a positive electrode active material for sodium-ion batteries.

The electrode active material may be a solid particle, may be a hollow particle, or may be a particle having a void. The size of the electrode active material is not particularly limited. For example, the average particle size of the electrode active material may be 0.1 $\mu$m or more and 10 $\mu$m or less, 1.0 $\mu$m or more and 8.0 $\mu$m or less, or 2.0 $\mu$m or more and 6.0 $\mu$m or less. The average particle size referred to in the present application is the particle size at 50% of the cumulative value of particle size distribution based on volume (D50, median diameter) measured by a laser diffraction/scattering method.

2. Manufacturing method for electrode active material

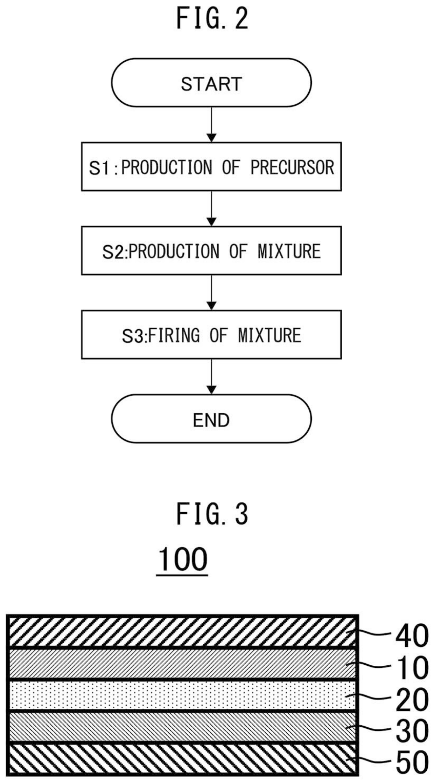

The above Na-containing transition metal oxide having an O3-type structure can be manufactured, for example, by the following method. As shown in FIG. 2, the manufacturing method for the Na-containing transition metal oxide having an O3-type structure according to one embodiment comprises

S1: obtaining a precursor comprising Ni and Mn by a coprecipitation method,
S2: mixing the precursor with a Na source to obtain a mixture, and
S3: firing the mixture to obtain a Na-containing transition metal oxide having an O3-type structure.

2.1 Production of precursor

In S1, a precursor comprising Ni and Mn is obtained by a coprecipitation method. In S1, obtaining a precursor having a low melting point is preferable. For example, in S1, the precursor obtained by a coprecipitation method may be a composite hydroxide comprising Ni and Mn. In S1, by obtaining a substance (for example, a composite hydroxide comprising Ni and Mn) having a low melting point as the precursor, the firing temperature in S3 described below can be lowered, the layers of transition metal elements are aligned in the ultimately obtained Na-containing transition metal oxide having an O3-type structure, and cation mixing is also reduced. The precursor may have any of various shapes. For example, the precursor may be particulate.

In S1, a composite hydroxide as the precursor above may be obtained by a coprecipitation method using an ion source that can form a precipitation with a transition metal ion in an aqueous solution, a Ni compound, and a Mn compound. The "ion source that can form a precipitate with a transition metal ion in an aqueous solution", for example, may be sodium hydroxide. The "Ni compound" may be a salt comprising Ni, and for example, may be a sulfate. The "Mn compound" may be a salt comprising Mn, and for example, may be a sulfate. In S1, for example, a first aqueous solution in which sodium hydroxide is dissolved and a second aqueous solution in which a Ni compound and a Mn compound are dissolved may be dropped and mixed to precipitate a composite hydroxide comprising Ni and Mn as the precursor. In this case, various sodium compounds may be added as a base, and an ammonium aqueous solution may be added for adjusting basicity. As far as the present inventors have confirmed, the state of the precursor varies depending on the pH of the solution in the coprecipitation method, and the physical property ($I_{003}/I_{104}$) of the ultimately obtained Na-containing transition metal oxide can vary. According to the findings of the present inventors, when the pH of the solution in the coprecipitation method is less than 12.0, the physical property ($I_{003}/I_{104}$) of the Na-containing transition metal oxide is likely to fall within a predetermined range.

In S1, the precursor may be comprise an element M. The element M is at least one selected from Fe, Ti, Zn, Co, Al, Zr, Y, Ca, Li, Rb, Cs, W, Ce, Mo, Ba, Mg, Ta, Nb, V, Sc, Sr, B, and Cu. The method of obtaining a precursor comprising an element M is not particularly limited. As described above, when obtaining the precursor by a coprecipitation method in S1, for example, a precursor comprising Mn, Ni, and the element M is obtained by further dissolving a compound of the element M in the above second aqueous solution, or by separately preparing a third aqueous solution in which a compound of the element M is dissolved and then dropping the solutions to mix. Alternatively, the element M is not added in S1, and doping with the element M may be carried out in S2 or S3 described below.

2.2 Production of mixture

In S2, a mixture is obtained by mixing the precursor obtained via S1 with a Na source. In the present embodiment, using a Na source having a low melting point is preferable. For example, the Na source mixed with the precursor in S2 may have a melting point of 460°C or lower. Examples of Na sources having such low melting point include sodium hydroxide and molten salts comprising Na (substances in which a plurality of types of Na salts are mixed and melted). In S2, by using a Na source having a low melting point as the Na source, the firing temperature in S3 described below can be lowered, the layers of transition metal elements are aligned in the ultimately obtained Na-containing transition metal oxide having an O3-type structure, and cation mixing is also reduced. The Na source may have any of various shapes. For example, the Na source may be particulate.

In S2, for example, the precursor and the Na source can be mixed by a mixing means to obtain a mixture. The mixing means is not particularly limited. The precursor and the Na source, for example, may be mixed manually using a mortar, or may be mixed mechanically using a mixer.

In S2, the mixing ratio of the precursor and the Na source may be adjusted so that, taking into account the portion of Na lost in S3 described below, $M_1/(M_2 + M_3)$ of the ultimately obtained Na-containing transition metal oxide is 0.97 or greater and 1.09 or less. $M_1$ is the molar quantity of Na in the Na-containing transition metal oxide, $M_2$ is the molar quantity of Ni contained in the Na-containing transition metal oxide, and $M_3$ is the molar quantity of Mn contained in the Na-containing transition metal oxide. In S2, when the amount of the Na source relative to the precursor is excessively large, a heterogeneous phase (impurity phase) other than an O3 phase is likely to form in the ultimately obtained Na-containing transition metal oxide. In S2, when the amount of the Na source relative to the precursor is excessively small, a sufficient amount of the O3 phase is not easily obtained in the ultimately obtained Na-containing transition metal oxide. According to the findings of the present inventors, if the amount of the ultimately obtained Na-containing transition metal oxide is large (for example, if 0.05 mol or more), the amount of the Na source relative to the precursor is relatively increased, whereas if the amount of the ultimately obtained Na-containing transition metal oxide is small (for example, if less than 0.05 mol), the amount of the Na source relative to the precursor is relatively decreased, thereby allowing $M_1/(M_2 + M_3)$ of the ultimately obtained Na-containing transition metal oxide to be adjusted so as to be 0.97 or greater and 1.09 or less.

In S2, the precursor may be mixed with the Na source and an element M source. For example, in S2, the precursor obtained via S1, the Na source, and an element M source comprising at least one element M selected from Fe, Ti, Zn, Co, Al, Zr, Y, Ca, Li, Rb, Cs, W Ce, Mo, Ba, Mg, Ta, Nb, V, Sc, Sr, B, and Cu may be mixed to obtain a mixture. The element M source, for example, is preferably a substance having a low melting point, such as a hydroxide or a molten salt. The amount of the element M source mixed with the precursor is determined in accordance with the chemical composition of the Na-containing transition metal oxide after firing.

2.3 Firing of mixture

In S3, a Na-containing transition metal oxide having an O3-type structure is obtained by firing the mixture obtained via S2. In S3, for example, the mixture may be subjected to a pre-firing, and then subjected to a main firing. The pre-firing is optional, and the conditions thereof are not particularly limited.

It is preferable that the main firing in S3 be carried out at a temperature at which an O3-type structure is obtained and which is also a low temperature. As far as the present inventors have confirmed, when the temperature of the main firing is 760°C or higher and 850°C or lower, the layers of transition metal elements are aligned in the ultimately obtained Na-containing transition metal oxide having an O3-type structure, and cation mixing is also reduced. When the ultimately obtained Na-containing transition metal oxide having an O3-type structure comprises, as constituent elements, Na, Ni, Mn, and O only (when an element M such as Fe is not contained), the temperature of the main firing, for example, may be 760°C or higher and 800°C or lower. When the ultimately obtained Na-containing transition metal oxide having an O3-type structure comprises, as a constituent element, an element M (for example, Fe) in addition to Na, Ni, Mn, and O, the temperature of the main firing, for example, may be 800°C or higher and 850°C or lower. As far as the present inventors have confirmed, the physical property ($I_{003}/I_{104}$) of the ultimately obtained Na-containing transition metal oxide can vary depending on the atmosphere of the main firing. According to the findings of the present inventors, when the atmosphere of the main firing comprises oxygen, the physical property ($I_{003}/I_{104}$) of the Na-containing transition metal oxide is likely to fall within a predetermined range. Specifically, the atmosphere of the main firing may be an oxygen-containing atmosphere such as an ambient air atmosphere or an oxygen atmosphere. The time of the main firing (time maintained at main firing temperature) is not particularly limited, and for example, may be 12 hours or more and 48 hours or less, or 15 hours or more and 25 hours or less.

In S3, the heating rate until pre-firing temperature or main firing temperature and the cooling rate after main firing are not particularly limited.

3. Battery

The electrode active material according to one embodiment comprises the above specific Na-containing transition metal oxide. The electrode active material, for example, is suitable as a positive electrode active material for batteries, especially as a positive electrode active material for sodium-ion batteries. FIG. 3 schematically shows the configuration of a battery according to one embodiment. As shown in FIG. 3, the battery 100 according to one embodiment comprises a positive electrode active material layer 10, an electrolyte layer 20, and a negative electrode active material layer 30. The positive electrode active material layer 10 comprises the electrode active material according to the above embodiment.

3.1 Positive electrode active material layer

The positive electrode active material layer 10 comprises at least the electrode active material according to the above embodiment, and may further optionally comprise an electrolyte, a conductive aid, and a binder. Further, the positive electrode active material layer 10 may additionally comprise various additives. The contents of the active material, electrolyte, conductive aid, and binder in the positive electrode active material layer 10 need only to be appropriately determined in accordance with the target battery performance. For example, when the entirety (entire solid content) of the positive electrode active material layer 10 is 100% by mass, the content of the active material may be 40% by mass or more, 50% by mass or more, or 60% by mass or more, and may be 100% by mass or less or 90% by mass or less. The shape of the positive electrode active material layer 10 is not particularly limited, and for example, may be a sheet-like positive electrode active material layer 10 having a substantially flat surface. The thickness of the positive electrode active material layer 10 is not particularly limited, and for example, may be 0.1 $\mu$m or more or 1 $\mu$m or more, and may be 2 mm or less or 1 mm or less.

3.1.1 Positive electrode active material

The positive electrode active material is as described above. The positive electrode active material may consist only of the above Na-containing transition metal oxide, or may comprise the above Na-containing transition metal oxide and another positive electrode active material (an additional positive electrode active material). From the viewpoint of further enhancing the effect according to the technique of the present disclosure, the ratio of the additional positive electrode active material to the entirety of the positive electrode active materials may be small. For example, when the entirety of the positive electrode active materials is 100% by mass, the content of the above Na-containing transition metal oxide is 50% by mass or more and 100% by mass or less, 60% by mass or more and 100% by mass or less, 70% by mass or more and 100% by mass or less, 80% by mass or more and 100% by mass or less, 90% by mass or more and 100% by mass or less, 95% by mass or more and 100% by mass or less, or 99% by mass or more and 100% by mass or less.

3.1.2 Electrolyte

The electrolyte that can be contained in the positive electrode active material layer 10 may be a solid electrolyte, may be a liquid electrolyte (electrolytic solution), or may be a combination thereof. The solid electrolyte may be any solid electrolyte as long as a known one is used. The solid electrolyte may be an inorganic solid electrolyte, or may be an organic polymer electrolyte. Particularly, an inorganic solid electrolyte has excellent ion-conducting properties and heat resistance. Examples of the inorganic solid electrolyte include at least one selected from oxides such as $Na_3Zr_2PSi_2O_{12}$ and $Na_2O\text{-}11Al_2O_3$; hydrides and borides such as $NaBH_4$, $NaB_{10}H_{10}$, $NaCB_9H_{10}$, $NaCB_{11}H_{12}$, and $NaB_{12}Cl_{12}$; sulfides such as $Na_3PS_4$, $Na_3SbS_4$, and $Na_{2.88}Sb_{0.88}W_{0.12}S_4$; and fluorides such as $NaPF_6$ and $NaBF_4$. The solid electrolyte, for example, may be particulate. The solid electrolyte may be of one type used alone, or may be of two or more types used in combination. The electrolytic solution, for example, comprises sodium ions as carrier ions. The electrolytic solution may be an aqueous electrolytic solution or a nonaqueous electrolytic solution. The composition of the electrolytic solution needs only to be the same as one known as a composition of an electrolytic solution for batteries. For example, a sodium salt dissolved at a predetermined concentration in a carbonate-based solvent can be used as the electrolytic solution. Examples of the carbonate-based solvent include fluoroethylene carbonate (FEC), ethylene carbonate (EC), propylene carbonate (PC), diethyl carbonate (DEC), dimethyl carbonate (DMC), and ethyl methyl carbonate (EMC). Examples of the sodium salt include $NaPF_6$, $NaClO_4$, $NaBF_4$, NaFSI, NaTFSI, and NaBETI.

### 3.1.3 Conductive aid

Examples of the conductive aid that can be contained in the positive electrode active material layer 10 include carbon materials such as vapor-grown carbon fiber (VGCF), acetylene black (AB), Ketjenblack (KB), carbon nanotube (CNT), and carbon nanofiber (CNF); and metal materials such as nickel, aluminum, and stainless steel. The conductive aid, for example, may be particulate or fibrous, and the size thereof is not particularly limited. The conductive aid may be of one type used alone, or may be of two or more types used in combination.

### 3.1.4 Binder

Examples of the binder that can be contained in the positive electrode active material layer 10 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders. The binder may be of one type used alone, or may be of two or more types used in combination.

### 3.2 Electrolyte layer

The electrolyte layer 20 comprises at least an electrolyte. When the battery 100 is a solid battery (may be a battery comprising a solid electrolyte with a liquid electrolyte partially used in combination, or may be an all-solid battery free of a liquid electrolyte), the electrolyte layer 20 comprises a solid electrolyte, and may further optionally comprise a binder. In this case, the contents of the solid electrolyte and the binder in the electrolyte layer 20 are not particularly limited. When the battery 100 is an electrolytic solution battery, the electrolyte layer 20 comprises an electrolytic solution, and may further comprise a separator for retaining the electrolytic solution and preventing contact between the positive electrode active material layer 10 and the negative electrode active material layer 30. The thickness of the electrolyte layer 20 is not particularly limited, and for example, may be 0.1 $\mu$m or more or 1 $\mu$m or more, and may be 2 mm or less or 1 mm or less.
The electrolyte contained in the electrolyte layer 20 needs only to be appropriately selected from among ones exemplified as an electrolyte that can be contained in the positive electrode active material layer 10 described above. The binder that can be contained in the electrolyte layer 20 needs only to be appropriately selected from among ones exemplified as a binder that can be contained in the positive electrode active material layer 10 described above. The electrolyte and the binder may each be of one type used alone, or may be of two or more types used in combination. The separator needs only to be any separator normally used in batteries. Examples thereof include those made of resins such as polyethylene (PE), polypropylene (PP), polyester, and polyamide. The separator may be of a single-layer structure, or may be of a multilayer structure. Examples of separators having a multilayer structure can include separators of a PE/PP two-layer structure and separators of a PP/PE/PP or PE/PP/PE three-layer structure. The separator may consist of a nonwoven fabric such as cellulose nonwoven fabric, resin nonwoven fabric, or glass-fiber nonwoven fabric.

### 3.3 Negative electrode active material layer

The negative electrode active material layer 30 comprises at least a negative electrode active material, and may optionally comprise an electrolyte, a conductive aid, and a binder. Further, the negative electrode active material layer 30 may additionally comprise various additives. The content of each of the negative electrode active material, electrolyte, conductive aid, and binder in the negative electrode active material layer 30 needs only to be appropriately determined in accordance with the target battery performance. For example, when the entirety (entire solid content) of the negative electrode active material layer 30 is 100% by mass, the content of the negative electrode active material may be 40% by mass or more, 50% by mass or more, or 60% by mass or more, and may be 100% by mass or less or 90% by mass or less. The shape of the negative electrode active material layer 30 is not particularly limited, and for example, may be a sheet having a substantially flat surface. The thickness of the negative electrode active material layer 30 is not particularly limited, and for example, may be 0.1 $\mu$m or more or 1 $\mu$m or more, and may be 2 mm or less or 1 mm or less.
Various materials having low electric potential (charge and discharge potentials) for storing and releasing charge-compensating ions compared to the above positive electrode active material can be adopted as the negative electrode active material. The negative electrode active material, for example, may be an inorganic-based negative electrode active material such as metallic sodium, may be a negative electrode active material consisting of an organic compound, or may be a combination thereof. The negative electrode active material may be of one type used alone, or may be of two or more types used in combination. The shape of the negative electrode active material needs only to be any of general shapes of negative electrode active materials of batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 $\mu$m or less, 100 $\mu$m or less, 50 $\mu$m or less, or 30 $\mu$m or less. Alternatively, the negative electrode active material may be sheet-like (foil-like or membranous), such as a sodium foil. Specifically, the negative electrode active material layer 30 may consist of a sheet of a negative electrode active material.

Examples of the electrolyte that can be contained in the negative electrode active material layer 30 include the above solid electrolytes and electrolytic solutions, and combinations thereof. Examples of the conductive aid that can be contained in the negative electrode active material layer 30 include the above carbon materials and the above metal materials. The binder that can be contained in the negative electrode active material layer 30 needs only to be appropriately selected, for example, from among ones exemplified as a binder that can be contained in the above positive electrode active material layer 10. The electrolyte and the binder may each be of one type used alone, or may be of two or more types used in combination.

3.4 Positive electrode current collector

As shown in FIG. 3, the battery 100 may be provided with a positive electrode current collector 40 in contact with the positive electrode active material layer 10. Any general positive electrode current collector for batteries can be adopted as the positive electrode current collector 40. The positive electrode current collector 40 may be foil-like, laminar, mesh-like, punched metal-like, or a foam. The positive electrode current collector 40 may be composed of a metal foil or a metal mesh, or may be composed of a combination of a resin and a conductive component. Particularly, a metal foil has excellent handleability. The positive electrode current collector 40 may consist of a plurality of foils. Examples of metals constituting the positive electrode current collector 40 include Cu, Ni, Cr, Au, Pt, Ag, Al, Fe, Ti, Zn, Co, and stainless steel. The positive electrode current collector 40 may have on the surface thereof some coating layer for the purpose of adjusting resistance. The positive electrode current collector 40 may be a metal foil or substrate plated or vapor-deposited with a metal described above. When the positive electrode current collector 40 consists of a plurality of metal foils, there may be some layer between the plurality of metal foils. The thickness of the positive electrode current collector 40 is not particularly limited, and for example, may be 0.1 $\mu$m or more and 1 $\mu$m or more, and may be 1 mm or less or 100 $\mu$m or less.

3.5 Negative electrode current collector

As shown in FIG. 3, the battery 100 may be provided with a negative electrode current collector 50 in contact with the negative electrode active material layer 30. Any general negative electrode current collector for batteries can be adopted as the negative electrode current collector 50. The negative electrode current collector 50 may be foil-like, laminar, mesh-like, punched metal-like, or a foam. The negative electrode current collector 50 may be a metal foil or a metal mesh, may be a carbon sheet, or may be composed of a combination of a resin and a conductive component. Particularly, a metal foil has excellent handleability. The negative electrode current collector 50 may consist of a plurality of foils or sheets. Examples of metals constituting the negative electrode current collector 50 include Cu, Ni, Cr, Au, Pt, Ag, Al, Fe, Ti, Zn, Co, and stainless steel. The negative electrode current collector 50 may have on the surface thereof some coating layer for the purpose of adjusting resistance. The negative electrode current collector 50 may be a metal foil or a substrate plated or vapor-deposited with a metal described above. When the negative electrode current collector 50 consists of a plurality of metal foils, there may be some layer between the plurality of metal foils. The thickness of the negative electrode current collector 50 is not particularly limited, and for example, may be 0.1 $\mu$m or more or 1 $\mu$m or more, and may be 1 mm or less or 100 $\mu$m or less.

3.6 Additional features

The battery 100, in addition to the above configuration, may be provided with any obvious configuration as a battery, such as tabs or terminals. The above configurations of the battery 100 may each be housed inside an outer packaging. Any known outer packaging can be adopted as the outer packaging of the battery. In addition, a plurality of batteries 100 may be optionally connected electrically and optionally stacked to form a battery pack. In this case, the battery pack may be housed inside a known battery case. The battery 100 may be provided with other obvious configurations such as the necessary terminals. Examples of shapes of the battery 100 can include coin-type, laminate-type, cylindrical, and rectangular. The battery 100, as described above, may be a sodium-ion battery. The battery 100 may be a secondary battery. In one embodiment, the battery 100 is a sodium-ion secondary battery.

4. Manufacturing method for battery

The battery 100 can be manufactured by applying any known method, except that the above specific electrode active material is used, and for example, can be manufactured as follows. However, the manufacturing method for the battery 100 is not limited to the following method. For example, each layer may be formed by dry molding.

(1) A positive electrode active material constituting a positive electrode active material layer is dispersed in a solvent to obtain a positive electrode layer slurry. The solvent used in this case is not particularly limited, and water and various organic solvents can be used. The positive electrode layer slurry is then applied on a surface of a positive electrode current collector using a doctor blade, followed by drying, whereby a positive electrode active material layer is formed on the surface of the positive electrode current collector to obtain a positive electrode.

(2) A negative electrode active material constituting a negative electrode active material layer is dispersed in a solvent to obtain a negative electrode layer slurry. The solvent used in this case is not particularly limited, and water and various organic solvents can be used. The negative electrode layer slurry is then applied on a surface of a negative electrode current collector using a doctor blade, followed by drying, whereby a negative electrode active material layer is formed on the surface of the negative electrode current collector to obtain a negative electrode. Alternatively, a sheet or foil of a metal active material may be used as the negative electrode active material layer.

(3) Layers are laminated so that an electrolyte layer (solid electrolyte layer or separator) is interposed between the negative electrode and the positive electrode to obtain a laminated body comprising a negative electrode current collector, a negative electrode active material layer, an electrolyte layer, a positive electrode active material layer, and a positive electrode current collector in this order. Additional members such as terminals are attached to the laminated body as needed.

(4) The laminated body is housed in a battery case. In the case of an electrolytic solution battery, an electrolytic solution is filled into the battery case. The laminated body is immersed in the electrolytic solution and sealed in the battery case, whereby a secondary battery is obtained. Note that, in the case of an electrolytic solution battery, the electrolytic solution may be contained in the negative electrode active material layer, the separator, and the positive electrode active material layer in the above step (3).

5. Method of increasing capacity and coulombic efficiency of battery

The technique of the present disclosure also has an aspect of a method of increasing the capacity and coulombic efficiency of a battery. Specifically, the method of increasing the capacity and coulombic efficiency of a battery of the present disclosure is characterized by the use of the electrode active material of the present disclosure above in a positive electrode active material layer of the battery.

6. Vehicle

As described above, the electrode active material of the present disclosure has high capacity and high coulombic efficiency, and is suitable as a positive electrode active material for batteries. A battery using an active material having such high capacity and high coulombic efficiency, for example, can be suitably used in at least one type of vehicle selected from hybrid vehicle (HEV), plug-in hybrid vehicle (PHEV), and electric vehicle (BEV). Specifically, the technique of the present disclosure has an aspect of a vehicle comprising a battery, wherein the battery comprises a positive electrode active material layer, an electrolyte layer, and a negative electrode active material layer, and the positive electrode active material layer comprises the above electrode active material of the present disclosure.

EXAMPLES

From the foregoing, one embodiment of each of the electrode active material, etc. has been described. However, the technique of the present disclosure can be modified in various ways other than the above embodiments in ranges that does not depart from the spirit of the invention. Hereinafter, the technique of the present disclosure will be further described with reference to the Examples. However, the technique of the present disclosure is not limited to the following Examples.

1. Manufacture of electrode active material

1.1 Example 1-1

1.1.1 Production of precursor

A sodium hydroxide aqueous solution having a concentration of 8 mol/L was loaded into a reaction vessel set at 40°C, and the pH of the aqueous solution within the reaction vessel was maintained at 11.5. A transition metal aqueous solution, obtained by mixing a nickel sulfate aqueous solution and a manganese sulfate aqueous solution, and a 28% by mass ammonium aqueous solution were added dropwise into the reaction vessel to synthesize a composite hydroxide as a precursor. The synthesized precursor was separated into a filtrate and a precursor using suction filtration. The precursor was left to stand overnight in a vacuum dryer and then collected.

1.1.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.1 mol. The Na molar quantity $M_1$, Ni molar quantity $M_2$, and Mn molar quantity $M_3$ in the mixture were set so that $M_1/(M_2 + M_3) = 1.05$.

1.1.3 Firing of mixture

The above mixture was placed within an electric furnace, and after a pre-firing in an ambient air atmosphere, was subjected to a main firing in the same ambient air atmosphere at a temperature of 800°C for 20 hours. The mixture was then cooled to room temperature and subjected to a crushing treatment to obtain a Na-containing transition metal oxide for evaluation.

1.2 Example 1-2

1.2.1 Production of precursor

A precursor was manufactured under the same conditions as in Example 1-1.

1.2.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.1 mol. The Na molar quantity $M_1$, Ni molar quantity $M_2$, and Mn molar quantity $M_3$ in the mixture were set so that $M_1/(M_2 + M_3) = 1.02$.

1.2.3 Firing of mixture

The above mixture was placed within an electric furnace, and after a pre-firing in an ambient air atmosphere, was subjected to a main firing in the same ambient air atmosphere at a temperature of 800°C for 20 hours. The mixture was then cooled to room temperature and subjected to a crushing treatment to obtain a Na-containing transition metal oxide for evaluation.

1.3 Example 1-3

1.3.1 Production of precursor

A precursor was manufactured under the same conditions as in Example 1-1.

1.3.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.03 mol. The Na molar quantity $M_1$, Ni molar quantity $M_2$, and Mn molar quantity $M_3$ in the mixture were set so that $M_1/(M_2 + M_3) = 1.05$.

### 1.3.3 Firing of mixture

The above mixture was placed within a tube furnace, and after a pre-firing in an oxygen atmosphere, was subjected to a main firing in the same oxygen atmosphere at a temperature of 780°C for 20 hours. The mixture was then cooled to room temperature and subjected to a crushing treatment to obtain a Na-containing transition metal oxide for evaluation.

### 1.4 Example 1-4

### 1.4.1 Production of precursor

A precursor was manufactured under the same conditions as in Example 1-1.

### 1.4.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.03 mol. The Na molar quantity $M_1$, Ni molar quantity $M_2$, and Mn molar quantity $M_3$ in the mixture were set so that $M_1/(M_2 + M_3) = 1.05$.

### 1.4.3 Firing of mixture

The above mixture was placed within an electric furnace, and after a pre-firing in an ambient air atmosphere, was subjected to a main firing in the same ambient air atmosphere at a temperature of 800°C for 20 hours. The mixture was then cooled to room temperature and subjected to a crushing treatment to obtain a Na-containing transition metal oxide for evaluation.

### 1.5 Comparative Example 1-1

### 1.5.1 Production of precursor

A sodium hydroxide aqueous solution having a concentration of 8 mol/L was loaded into a reaction vessel set at 25°C, and the pH of the aqueous solution within the reaction vessel was maintained at 12.0. A transition metal aqueous solution, obtained by mixing a nickel sulfate aqueous solution and a manganese sulfate aqueous solution, and a 28% by mass ammonium aqueous solution were added dropwise into the reaction vessel to synthesize a composite hydroxide as a precursor. The synthesized precursor was separated into a filtrate and a precursor using suction filtration. The precursor was left to stand overnight in a vacuum dryer and then collected.

### 1.5.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.03 mol. The Na molar quantity $M_1$, Ni molar quantity $M_2$, and Mn molar quantity $M_3$ in the mixture were set so that $M_1/(M_2 + M_3) = 1.05$.

### 1.5.3 Firing of mixture

The above mixture was placed within an electric furnace, and after a pre-firing in an ambient air atmosphere, was subjected to a main firing in the same ambient air atmosphere at a temperature of 800°C for 20 hours. The mixture was then cooled to room temperature and subjected to a crushing treatment to obtain a Na-containing transition metal oxide for evaluation.

### 1.6 Comparative Example 1-2

### 1.6.1 Production of precursor

A sodium hydroxide aqueous solution having a concentration of 8 mol/L was loaded into a reaction vessel set at 40°C, and the pH of the aqueous solution within the reaction vessel was maintained at 12.5. A transition metal aqueous solution, obtained by mixing a nickel sulfate aqueous solution and a manganese sulfate aqueous solution, and a 28% by mass ammonium aqueous solution were added dropwise into the reaction vessel to synthesize a composite hydroxide as a precursor. The synthesized precursor was separated into a filtrate and a precursor using suction filtration. The precursor was left to stand overnight in a vacuum dryer and then collected.

1.6.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.06 mol. The Na molar quantity $M_1$, Ni molar quantity $M_2$, and Mn molar quantity $M_3$ in the mixture were set so that $M_1/(M_2 + M_3) = 1.05$.

1.6.3 Firing of mixture

The above mixture was placed within an electric furnace, and after a pre-firing in an ambient air atmosphere, was subjected to a main firing in the same ambient air atmosphere at a temperature of 800°C for 20 hours. The mixture was then cooled to room temperature and subjected to a crushing treatment to obtain a Na-containing transition metal oxide for evaluation.

1.7 Comparative Example 1-3

1.7.1 Production of precursor

A precursor was manufactured under the same conditions as in Comparative Example 1-1.

1.7.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.03 mol. The Na molar quantity $M_1$, Ni molar quantity $M_2$, and Mn molar quantity $M_3$ in the mixture were set so that $M_1/(M_2 + M_3) = 1.05$.

1.7.3 Firing of mixture

The above mixture was placed within a tube furnace, and after a pre-firing in an argon atmosphere, was subjected to a main firing in the same argon atmosphere at a temperature of 750°C for 20 hours. The mixture was then cooled to room temperature and subjected to a crushing treatment to obtain a Na-containing transition metal oxide for evaluation.

1.8 Comparative Example 1-4

1.8.1 Production of precursor

A precursor was manufactured under the same conditions as in Comparative Example 1-1.

1.8.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.03 mol. The Na molar quantity $M_1$, Ni molar quantity $M_2$, and Mn molar quantity $M_3$ in the mixture were set so that $M_1/(M_2 + M_3) = 1.05$.

1.8.3 Firing of mixture

The above mixture was placed within a tube furnace, and after a pre-firing in an argon atmosphere, was subjected to a main firing in the same argon atmosphere at a temperature of 800°C for 20 hours. The mixture was then cooled to room temperature and subjected to a crushing treatment to obtain a Na-containing transition metal oxide for evaluation.

1.9 Example 2-1

1.9.1 Production of precursor

A sodium hydroxide aqueous solution having a concentration of 8 mol/L was loaded into a reaction vessel set at 40°C, and the pH of the aqueous solution within the reaction vessel was maintained at 11.5. A transition metal aqueous solution, obtained by mixing a nickel sulfate aqueous solution, a manganese sulfate aqueous solution, and an iron sulfate aqueous solution, and a 28% by mass ammonium aqueous solution were added dropwise into the reaction vessel to synthesize a composite hydroxide as a precursor. The synthesized precursor was separated into a filtrate and a precursor using suction filtration. The precursor was left to stand overnight in a vacuum dryer and then collected.

1.9.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.03 mol. The Na molar quantity $M_1$, Ni molar quantity $M_2$, and Mn molar quantity $M_3$ in the mixture were set so that $M_1/(M_2 + M_3) = 1.05$.

1.9.3 Firing of mixture

The above mixture was placed within a tube furnace, and after a pre-firing in an oxygen atmosphere, was subjected to a main firing in the same oxygen atmosphere at a temperature of 800°C for 20 hours. The mixture was then cooled to room temperature and subjected to a crushing treatment to obtain a Na-containing transition metal oxide for evaluation.

1.10 Example 2-2

1.10.1 Production of precursor

A sodium hydroxide aqueous solution having a concentration of 8 mol/L was loaded into a reaction vessel set at 40°C, and the pH of the aqueous solution within the reaction vessel was maintained at 11.1. A transition metal aqueous solution, obtained by mixing a nickel sulfate aqueous solution, a manganese sulfate aqueous solution, and an iron sulfate aqueous solution, and a 28% by mass ammonium aqueous solution were added dropwise into the reaction vessel to synthesize a composite hydroxide as a precursor. The synthesized precursor was separated into a filtrate and a precursor using suction filtration. The precursor was left to stand overnight in a vacuum dryer and then collected.

1.10.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.1 mol. The Na molar quantity $M_1$, Ni molar quantity $M_2$, and Mn molar quantity $M_3$ in the mixture were set so that $M_1/(M_2 + M_3) = 1.02$.

1.10.3 Firing of mixture

The above mixture was placed within an electric furnace, and after a pre-firing in an ambient air atmosphere, was subjected to a main firing in the same ambient air atmosphere at a temperature of 850°C for 20 hours. The mixture was then cooled to room temperature and subjected to a crushing treatment to obtain a Na-containing transition metal oxide for evaluation.

1.11 Example 2-3

1.11.1 Production of precursor

A precursor was manufactured under the same conditions as in Example 2-2.

1.11.2 Production of mixture

The above composite hydroxide as the precursor and sodium hydroxide as the Na source were mixed to obtain a mixture. Each of the composite hydroxide and sodium hydroxide was weighed so that the amount of the ultimately obtained sodium-containing transition metal oxide was 0.1 mol. The Na molar quantity $M_1$, Ni molar quantity $M_2$, and Mn molar quantity $M_3$ in the mixture were set so that $M_1/(M_2 + M_3) = 1.05$.

1.11.3 Firing of mixture

The above mixture was placed within an electric furnace, and after a pre-firing in an ambient air atmosphere, was subjected to a main firing in the same ambient air atmosphere at a temperature of 800°C for 20 hours. The mixture was then cooled to room temperature and subjected to a crushing treatment to obtain a Na-containing transition metal oxide for evaluation.

2. Confirmation of chemical composition and crystal structure of electrode active material

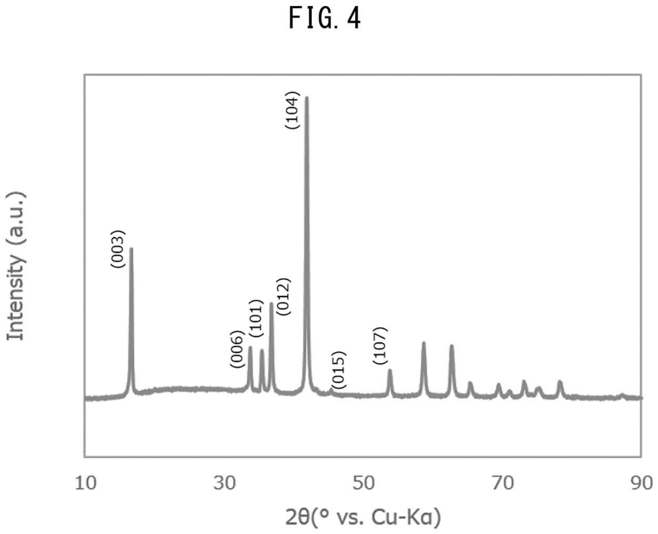

The chemical compositions of the Na-containing transition metal oxides obtained as described above were confirmed. The Na-containing transition metal oxides had compositions indicated in Table 1 below. X-ray diffraction patterns of the Na-containing transition metal oxides were acquired, and all had O3-type structures. From each of the X-ray diffraction patterns, a peak intensity ratio $I_{003}/I_{104}$ (where $I_{003}$ is the diffraction peak intensity of the (003) plane in the X-ray diffraction pattern, and $I_{104}$ is the diffraction peak intensity of the (104) plane in the X-ray diffraction pattern) was determined and as indicated in Table 1 below. The acquisition conditions of the X-ray diffraction patterns are as described in the embodiments. For reference, FIG. 4 shows an X-ray diffraction pattern of the Na-containing transition metal oxide having an O3-type structure.

TABLE 1

| | Chemical composition | Crystal structure | Presence of heterogeneous phase | $I_{003}/I_{104}$ |
|---|---|---|---|---|
| Example 1-1 | $Na_{1.03}Ni_{0.50}Mn_{0.50}O_2$ | 03 | No | 0.497 |
| Example 1-2 | $Na_{1.01}Ni_{0.50}Mn_{0.50}O_2$ | 03 | No | 0.492 |
| Example 1-3 | $Na_{1.07}Ni_{0.50}Mn_{0.50}O_2$ | 03 | Yes | 0.503 |
| Example 1-4 | $Na_{1.08}Ni_{0.50}Mn_{0.50}O_2$ | 03 | No | 0.503 |
| Comparative Example 1-1 | $Na_{1.09}Ni_{0.50}Mn_{0.50}O_2$ | 03 | No | 0.476 |
| Comparative Example 1-2 | $Na_{1.05}Ni_{0.50}Mn_{0.50}O_2$ | 03 | No | 0.435 |
| Comparative Example 1-3 | $Na_{1.01}Ni_{0.50}Mn_{0.50}O_2$ | 03 | No | 0.409 |
| Comparative Example 1-4 | $Na_{1.06}Ni_{0.50}Mn_{0.50}O_2$ | 03 | Yes | 0.554 |
| Example 2-1 | $Na_{1.07}Ni_{0.34}Mn_{0.34}Fe_{0.32}O_2$ | 03 | Yes | 0.510 |
| Example 2-2 | $Na_{0.97}Ni_{0.34}Mn_{0.34}Fe_{0.33}O_2$ | 03 | No | 0.513 |
| Example 2-3 | $Na_{1.02}Ni_{0.34}Mn_{0.34}Fe_{0.33}O_2$ | 03 | No | 0.513 |

3. Production of battery

Each electrode active material was mixed with acetylene black (AB) as a conductive aid and polyvinylidene fluoride (PVdF) as a binder, so as to obtain a mass ratio of active material: conductive aid : binder = 85:10:5, to obtain an electrode mixture. A paste comprising the obtained electrode mixture was applied to an aluminum foil and air-dried at 80°C for 30 minutes to obtain a laminated body. The obtained laminated body was punched out to φ16mm, pressed, and vacuum-dried at 120°C, thereby obtaining an electrode for evaluation. The obtained electrode and Na metal were used to produce a 2032-type coin battery. As the electrolytic solution, a 1 M $NaPF_6$ non-aqueous electrolytic solution was used. As the solvent constituting the electrolytic solution, a mixed solvent of EC, DMC, and EMC was used.

4. Charge-discharge test

The obtained coin battery was subjected to a charge-discharge test at 25°C in a Na potential range of 4.2 V to 2.0 V, and the initial charge capacity, initial discharge capacity, and reversible capacity (coulombic efficiency) were determined. The C rate in the charge-discharge test was set to 0.3 C.

5. Evaluation results

Results of the charge-discharge test are shown in Table 2 below.

TABLE 2

|  | $I_{003}/I_{104}$ | Initial charge capacity (mAh/g) | Initial discharge capacity (mAh/g) | Coulombic efficiency (%) |
|---|---|---|---|---|
| Example 1-1 | 0.497 | 215.52 | 189.92 | 88.12 |
| Example 1-2 | 0.492 | 218.36 | 197.27 | 90.34 |
| Example 1-3 | 0.503 | 220.02 | 187.55 | 85.24 |
| Example 1-4 | 0.503 | 218.85 | 179.37 | 81.96 |
| Comparative Example 1-1 | 0.476 | 204.25 | 173.90 | 85.14 |
| Comparative Example 1-2 | 0.435 | 217.08 | 165.34 | 76.16 |
| Comparative Example 1-3 | 0.409 | 178.94 | 113.20 | 63.26 |
| Comparative Example 1-4 | 0.554 | 220.06 | 161.62 | 73.44 |
| Example 2-1 | 0.510 | 173.37 | 140.19 | 80.87 |
| Example 2-2 | 0.513 | 163.90 | 142.94 | 87.21 |
| Example 2-3 | 0.513 | 173.34 | 147.43 | 85.05 |

As is clear from the results shown in Table 2, it can be said that an electrode active material comprising a Na-containing transition metal oxide that satisfies the following requirements (A) to (C) has high capacity and high coulombic efficiency.

(A) The Na-containing transition metal oxide has an O3-type structure.

(B) The Na-containing transition metal oxide comprises, as constituent elements, Na, Ni, Mn, and O.

(C) An X-ray diffraction pattern of the Na-containing transition metal oxide satisfies the relationship (1) below.

$$0.476 < I_{003}/I_{104} < 0.554 \dots (1)$$

$I_{003}$: diffraction peak intensity of (003) plane in the X-ray diffraction pattern
$I_{104}$: diffraction peak intensity of (104) plane in the X-ray diffraction pattern

In the Examples above, although an electrode active material consisting of Na, Ni, Mn, and O or an electrode active material consisting of Na, Ni, Mn, Fe, and O were exemplified, the constituent elements of the electrode active material are not limited thereto. Even if any other optional doping element is contained, as long as the above requirements (B) and (C) are satisfied, it is considered that high capacity and high coulombic efficiency are ensured.

REFERENCE SIGNS LIST

100 battery
10 positive electrode active material layer
20 electrolyte layer
30 negative electrode active material layer
40 positive electrode current collector
50 negative electrode current collector

**Claims**

1. An electrode active material, comprising a Na-containing transition metal oxide, wherein the Na-containing transition metal oxide has an O3-type structure,

    the Na-containing transition metal oxide comprises, as constituent elements, Na, Ni, Mn, and O, and
    an X-ray diffraction pattern of the Na-containing transition metal oxide satisfies relationship (1) below:

$$0.76 < I_{003}/I_{104} < 0.554 \ (1)$$

    $I_{003}$: diffraction peak intensity of (003) plane in the X-ray diffraction pattern
    $I_{104}$: diffraction peak intensity of (104) plane in the X-ray diffraction pattern.

2. The electrode active material according to claim 1, wherein
    the X-ray diffraction pattern of the Na-containing transition metal oxide satisfies relationship (2) below:

$$0.92 \leq I_{003}/I_{104} \leq 0.513 \ (2).$$

3. The electrode active material according to claim 1 or 2, wherein
    the Na-containing transition metal oxide comprises, as a constituent element, Fe.

4. A battery, comprising a positive electrode active material layer, an electrolyte layer, and a negative electrode active material layer, wherein
    the positive electrode active material layer comprises the electrode active material according to any one of claims 1 to 3.

## FIG. 1A

Layer of transition metal element

Sodium ion

## FIG. 1B

Layer of transition metal element

Sodium ion

Transition metal ion

FIG. 2

START

↓

S1:PRODUCTION OF PRECURSOR

↓

S2:PRODUCTION OF MIXTURE

↓

S3:FIRING OF MIXTURE

↓

END

FIG. 3

100

40
10
20
30
50

# FIG. 4

Europäisches
Patentamt

European
Patent Office

Office européen
des brevets

# EUROPEAN SEARCH REPORT

**Application Number**

EP 25 21 4277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/123299 A1 (HUANG LITING [CN] ET AL) 21 April 2022 (2022-04-21) * comparative exmaples 3 and 4, embodiment 11; table 1 * | 1-4 | INV. C01G53/51 C01G53/84 H01M4/525 |
| X | US 2024/079577 A1 (ZHOU CHAOYI [CN] ET AL) 7 March 2024 (2024-03-07) * paragraph [0064] - paragraph [0066]; example 2 * | 1-4 | |
| X | WO 2014/156765 A1 (SUMITOMO CHEMICAL CO [JP]; UNIV TOKYO SCI EDUC FOUND [JP]) 2 October 2014 (2014-10-02) * claims; figure 1; example 1 * | 1-4 | |

**TECHNICAL FIELDS SEARCHED (IPC)**

C01G
H01M

The present search report has been drawn up for all claims

| Place of search | Date of completion of the search | Examiner |
|---|---|---|
| Munich | 22 April 2026 | Senftleben, Zeynep |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 25 21 4277

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2026

| Patent document cited in search report | | | Publication date | Patent family member(s) | | Publication date |
|---|---|---|---|---|---|---|
| US 2022123299 | A1 | | 21-04-2022 | CN 112670497 | A | 16-04-2021 |
| | | | | CN 119812300 | A | 11-04-2025 |
| | | | | CN 119905574 | A | 29-04-2025 |
| | | | | EP 3972016 | A1 | 23-03-2022 |
| | | | | EP 4559876 | A2 | 28-05-2025 |
| | | | | US 2022123299 | A1 | 21-04-2022 |
| | | | | US 2025260008 | A1 | 14-08-2025 |
| | | | | WO 2021057457 | A1 | 01-04-2021 |
| US 2024079577 | A1 | | 07-03-2024 | CN 115548285 | A | 30-12-2022 |
| | | | | EP 4335825 | A1 | 13-03-2024 |
| | | | | JP 7736752 | B2 | 09-09-2025 |
| | | | | JP 2024037155 | A | 18-03-2024 |
| | | | | JP 2025172877 | A | 26-11-2025 |
| | | | | KR 20240034141 | A | 13-03-2024 |
| | | | | US 2024079577 | A1 | 07-03-2024 |
| WO 2014156765 | A1 | | 02-10-2014 | CN 105103347 | A | 25-11-2015 |
| | | | | JP 6103456 | B2 | 29-03-2017 |
| | | | | JP WO2014156765 | A1 | 16-02-2017 |
| | | | | US 2016056461 | A1 | 25-02-2016 |
| | | | | WO 2014156765 | A1 | 02-10-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023166332 A, Kokai

**Non-patent literature cited in the description**

- *J. Electrochem. Soc.*, 2012, vol. 159 (7), A1048-A1051

- *Inorg. Chem.*, 2012, vol. 51, 6211-6220